**Europäisches Patentamt**

**European Patent Office**

**Office européen des brevets**

(11) Veröffentlichungsnummer: **0 415 128 A1**

## (12) EUROPÄISCHE PATENTANMELDUNG

(21) Anmeldenummer: **90115033.4**

(22) Anmeldetag: **04.08.90**

(51) Int. Cl.5: **F01N 3/30, F02B 37/12, F02B 33/44**

(30) Priorität: **30.08.89 DE 3928666**

(43) Veröffentlichungstag der Anmeldung:
**06.03.91 Patentblatt 91/10**

(84) Benannte Vertragsstaaten:
**CH DE FR GB IT LI**

(71) Anmelder: **ASEA BROWN BOVERI AG**
**Haselstrasse**
**CH-5401 Baden(CH)**

(72) Erfinder: **Mayer, Andreas**
**Fohrhölzlistrasse 14b**
**CH-5443 Niederrohrdorf(CH)**

(54) Schaltung einer Brennkraftmaschine.

(57) Bei einer Schaltung einer Brennkraftmaschine, bestehend aus einem Motor (3), einem Druckwellenlader (1), einem Ladeluftkühler (2) und einem hochdruckseitig des Druckwellenladers plazierten Katalysators (4), wird zur Kühlung des letztgenannten ein Teil Ladeluft (222) abgezweigt und dem Katalysator (4) zugeführt. Nach Durchlauf des Katalysators (4) wird die kalorisch verbrauchte Ladeluft in die Auspuffgase (444) eingeleitet.

## FIG.1

EP 0 415 128 A1

# SCHALTUNG EINER BRENNKRAFTMASCHINE

Die vorliegende Erfindung betrifft eine Schaltung einer Brennkraftmaschine gemäss oberbegriff des Anspruchs 1.

## Stand der Technik

Das Träger-Material eines heutigen Katalysators eines Ottomotors, nämlich Cordierit, hat einen Schmelzpunkt von etwa 1460 °C und ist damit auch unter extremen Bedingungen am Ottomotor problemlos einsetzbar.

Die Fragen hinsichtlich des "Canning", können inzwischen sowohl für den motorfernen Anbau (Umgebungstemperaturen, Gasbrand etc.) als auch für den motornahen Anbau (Schwingungen) als gelöst betrachtet werden.

Der eigentliche Katalysator, meist Platin oder Platin/Rodium mit zusätzlichen Aktivierungs-Additiven, wird jedoch nicht auf das Cordierit direkt aufgetragen, sondern zwecks Vervielfachung der Oberfläche auf eine zwischenschicht aus Gamma-Aluminiumoxid. Das Gamma-Aluminiumoxid besitzt eine riesige, aus stengelartigen Kristallen aufgebaute Struktur, welche die Oberfläche um etwa einen Faktor 10 000 zu vergrössern vermag. Das eigentliche Problem besteht darin, dass sich dieses Material bereits bei Temperaturen um 850 °C in eine andere Kristallform, ein Alpha-Aluminiumoxid mit kugelförmiger Gestalt, umwandelt, wobei daraus eine vollständig ungenügende Oberfläche resultiert. Der damit im Zusammenhang stehende Alterungsprozess nach dem Produkt "Zeit x Temperatur" lässt schnell die Wirksamkeit des Katalysators auf ein Drittel oder weniger der Anfangskonversion sinken. Andererseits besteht für den Ablauf des katalytischen Prozesses, sowohl als Oxidation als auch als Reduktion, die Anforderung einer Mindesttemperatur, der soge nannten Anspringtemperatur. Die soeben genannten physikalischen Gegebenheiten führen zu einem kaum zu lösenden Dilemma:

a) Der motornah plazierte Katalysator erfährt bei Vollas-Betrieb rasch jene vorne beschriebene Umwandlung der Kristall-Konfiguration und verliert infolgedessen weitgehend seine Aktivität.

b) Der motorfern angeordnete Katalysator vermag erst Minuten nach dem Start seine volle Aktivität zu entfalten, denn es muss zugrundegelegt werden, dass man pro Meter Abgasleitung mit einem Temperaturabbau von ca. 100 °C zu rechnen hat. Dadurch wird die gefürchtete HG-Spitze beim Start unverändert durchgelassen. Kommt hinzu, dass sich durch die Alterung, der auch ein motorferner Katalysator im gewissen Grad ausgesetzt ist, die Anspringtemperatur nach oben verschiebt, was den negativen Effekt verstärkt.

Nach bekanntgewordener Anwendung ist bis anhin versucht worden, einen Kompromiss zwischen den beiden Anordungen zu finden. Die Resultate sind ernüchternd, ist es bis anhin nicht gelungen, mit einem Katalysator die US-Werte hinsichtlich Alterungsbeständigkeit zu unterschreiten. Es ist auch die Konstellation bekanntgeworden, einen zusätzlichen MetallträgerKatalysator zum Abbau der Temperaturspitzen dicht am Motor zu plazieren. Auch diese Lösung hat nicht den Durchbruch gebracht, stellte sich doch die Alterung dieses Vor-Katalysators schneller als erwartet ein.

## Aufgabe der Erfindung

Hier will die Erfindung Abhilfe schaffen. Der Erfindung, wie sie in den Ansprüchen gekennzeichnet ist, liegt die Aufgabe zugrunde, die Alterung bei einem Katalysator der eingangs genannten Art zu minimieren, dies bei maximierter Betriebs- Ak tivität des Katalysators.

Die Grundidee besteht darin, dass ein motornah plazierter Katalysator unter Einsatz der Ladeluft gekühlt wird, womit zugleich gesagt ist, dass die Aufladung zunächst Voraussetzung, allerdings nicht unabdingbar, des Systems ist, wobei diesbezüglich auf die durchaus mögliche Alternative eines eigens für die Luftzuführung vorzusehenden Kompressors bei einem nicht aufgeladenen Verbrennungsmotor hingewiesen wird.

Das Regelgesetz ist bei Abgas-Aufladung, also bei einem Turbolader oder Druckwellenlader, dergestalt konzipiert, dass bei steigender Last, somit bei zunehmender Abgastemperatur und steigender Erhitzung des Katalysators, wegen des mithin stattfindenden grösseren Durchsatzes, die verfügbare Menge an Ladeluft gleichzeitig zunimmt. Der Effekt ist bei beiden Systemen im Bereich Vollast oberer Drehzahl in ähnlicher Weise gegeben, wobei beim Druckwellenlader mehr Reserve im mittleren und unteren Bereich besteht. Der mechanische Lader hat diese NaturGesetzmässigkeit an sich zwar nicht, kann aber entsprechend angepasst und eingeregelt werden.

Beim aufgeladenen Motor wird ein Überschuss an Ladeluft im Vollast-Bereich durch Abblasen auf der Gasseite auf das gewünschte Niveau zurückgeregelt. Es ist jedoch ohne weiteres möglich, die Abblasung auf der Luftseite vorzunehmen und den dadurch verfügbaren Ladeluftstrom zur Kühlung eines Katalysators zu verwenden.

Durch diese Konfiguration wird nun möglich, den Katalysator motornah zu plazieren, womit die sich aus dieser Plazierung heraus ergebenden Vorteile voll ausgenutzt werden; die Nachteile aus dieser Plazierung, wie sie vorne erläutert wurden, werden durch besagte Kühlung des Katalysators anhand vorzugsweise der Ladeluft erfolgreich bekämpft. Damit wird das bis anhin nicht gelöste Problem der schnellen Alterung eines motornah plazierten Katalysators aus der Welt geschafft.

Vorteilhafte und zweckmässige Weiterbildungen der erfindungsgemässen Aufgabenlösung sind in den abhängigen Ansprüchen gekennzeichnet.

Kurze Beschreibung der Figuren

Im folgenden wird anhand der Zeichnung Ausführungsbeispiele der Erfindung erläutert. Alle für das unmittelbare Verständnis der Erfindung nicht erforderlichen Elemente sind fortgelassen. Die Strömungsrichtung der Medien ist mit Pfeilen gekennzeichnet. In den Figuren sind gleiche Elemente mit den gleichen Bezugszeichen versehen.

Es zeigt:

Fig.1 eine Schaltung eines mit einem Druckwellenlader aufgeladenen Verbrennungsmotors, wobei der Katalysator hochdruckseitig dieses Laders plaziert ist,

Fig.2 eine Schaltung eines mit einem Druckwellenlader aufgeladenen Verbrennungsmotors, wobei der Katalysator niederdruckseitig angeordnet ist,

Fig.3 eine Schaltung eines mit einem mechanischen Lader aufgeladenen Verbrennnungsmotors, wobei der Katalysator niederdruckseitig des Laders angeordnet ist,

Fig.4 einen Katalysator für die hochdruckseitige Anordnung,

Fig.5 einen Katalysator für die niederdruckseitige Anordnung,

Fig.6 einen Aufbau des Katalysators,

Fig. 7 + 8 einen weiteren Aufbau des Katalysators.

Beschreibung der Ausführungsbeispiele

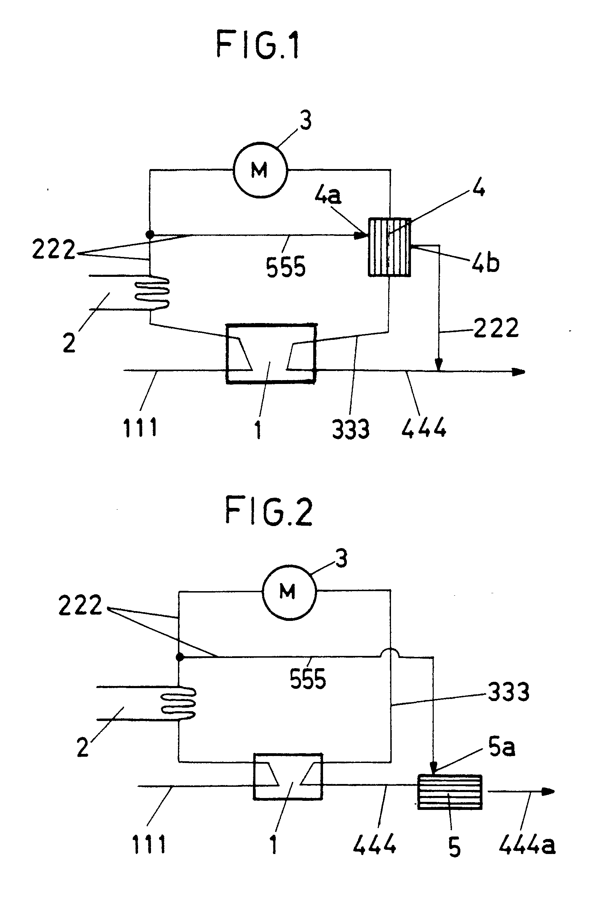

Fig. 1 zeigt eine Schaltung eines mit einem Druckwellenlader 1 aufgeladenen Verbrennungsmotors 3. Die nachfolgend summarische Beschreibung dieser Schaltung verfolgt lediglich den Zweck, das Umfeld eines in die Schaltung integrierten Katalysators 4 zu umreissen. Der grundsätzliche Aufbau des Druckwellenladers, insbesondere dessen genaue Struktur, kann der Druckschrift CH-T-123 143 der Anmelderin oder aus der Patentschrift CH-378 595 entnommen werden. Diese Druckschriften vermögen des weiteren ein Verständnis des eigentlichen, äusserst komplexen gasdynamischen Druckwellenprozesses, welcher nicht Gegenstand vorliegender Erfindung ist, zu vermitteln.

Der für das Verständnis der Erfindung notwendige Prozessablauf wird hingegen nachstehend kurz erläutert:

Im wesentlichen besteht der Druckwellenlader 1 aus einem ersten Gehäuse mit einem Eintritt für die Frischluft 111 und einem Austritt für die Ladeluft 222, aus einem zweiten Gehäuse mit einem Eintritt für die Abgase 333 aus einem Verbrennungsmotor 3 und einem Austritt für die Auspuffgase 444, aus einem zwischen den beiden Gehäusen plazierten Zellenrotor und aus einem Mantel, der den Zellenrotor umschliesst.

Die Druckwellenvorgänge laufen im Innern der einzelnen Rotor-Zellen ab und bewirken im wesentlichen, dass sich ein gasgefüllter und ein luftgefüllter Raum bilden. Im ersteren entspannt sich das Abgas 333 und entweicht dann als Auspuffgas 444 über eine Niederdruck-Abströmungsleitung ins Freie, während im zweiten ein Anteil der angesaugten Frischluft 111 verdichtet und als Ladeluft 222 über eine Hochdruckluft-Antrittsleitung ausgeschoben und dem Verbrennungsmotor 3 zugeführt wird.

Die Ladeluft 222 durchströmt einen Ladeluftkühler 2, bevor sie dann dem Verbrennungsmotor 3 zugeführt wird. Beim aufgeladenen Ottomotor ist ein Ladeluftkühler 2 ohnehin immer vorhanden. Ein Teil dieser gekühlten Ladeluft 222 wird vor dem Verbrennungsmotor 3 über eine Leitung 555 dem Katalysator 4 zu dessen Kühlung zugeführt.

Für die Gestaltung des Systems ergeben sich nun Besonderheiten, die von der Lader-Bauart und den Katalysator-Eigenschaften abhängen.

Ist die Schaltung mit einem Druckwellenlader 1, oder allgemein formuliert mit einem Abgas-Lader bestückt, so ist festzustellen, dass ein Druckgefälle auf der Hochdruckseite nicht die Regel ist, weshalb eine direkte Zuführung der Ladeluft 222, im Sinne einer Mischung mit den Abgasen 333, in einen vor einem Lader angeordneten Katalysator mithin nicht möglich ist. Bei Plazierung des Katalysators 4 hochdruckseitig ist demnach für die zu Kühlzwekken herangeführte Ladeluft 222 ein separater Kreislauf mit einem Eintritt 4a in den Katalysator 4 und einem Austritt 4b aus demselben vorzusehen. Nach Durchströmung des Katalysators 4 wird die kalorisch verbrauchte Ladeluft 222a niederdruckseitig des Druckwellenladers 1 den Auspuffgasen 444 beigemischt.

Bezüglich der Katalysator-Eigenschaften ist zu sagen, dass bei einem Dreiweg-Katalysator eine Mischung von Ladeluft 222 mit den Abgasen 333 vor dem Katalysator oder im Katalysator selbst ohnehin nicht zulässig wäre, da das Gemisch stöchiometrisch -mit regelmässigen Fett/Magerpulsationen - elektronisch geregelt wird. Weist demnach die Schaltung einen hochdruckseitig plazierten Dreiweg-Katalysator auf, so ist die herangeführte Ladeluft 222 zur Kühlung desselben nach dem vorhandenen Abgaslader ins Abgassystem zu kanalisieren.

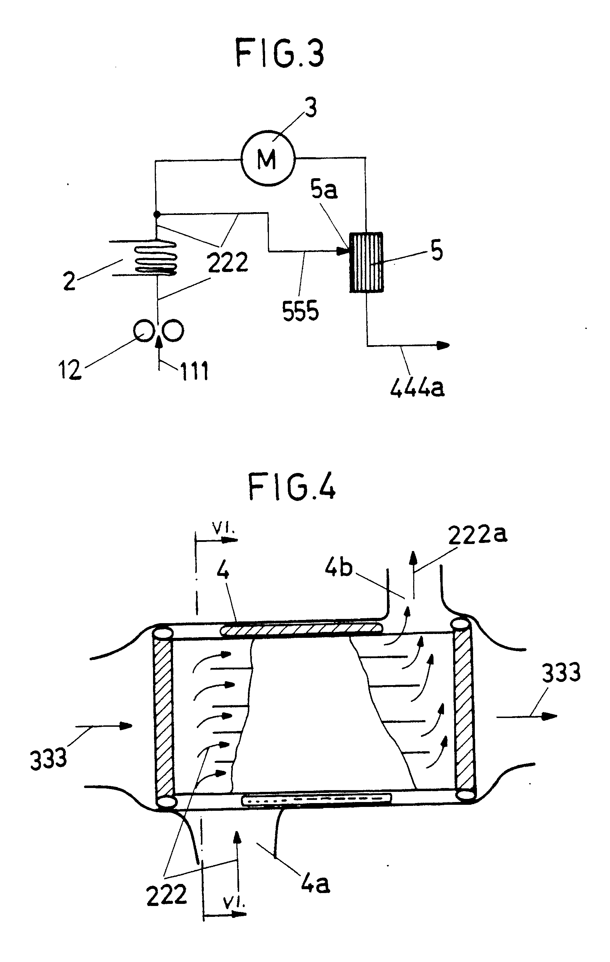

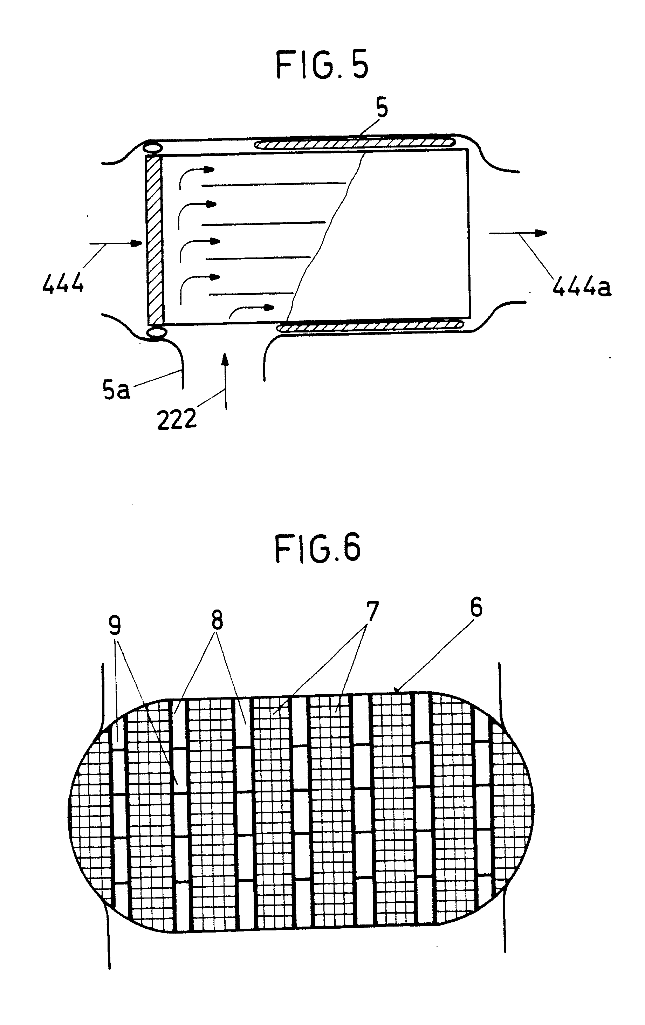

Bezüglich der Bauart eines solchen Katalysators wird auf die Ausführungen im Zusammenhang mit den Fig. 4 und 6 verwiesen.

Hat man demgegenüber mit einem reinen Oxidations-Katalysator zu tun, so könnte ohne weiteres an eine Mischung zwischen La deluft 222 und Abgasen 333 vor dem Katalysator 4 oder im Katalysator selbst gedacht werden. Die Mischung der beiden Medien im Katalysator hätte den Vorteil, dass eine gleichmässige Vermischung und damit gleichmässige Kühlung erzielt werden könnte. Selbstverständlich ist für diese Mischung-Kühlart ein erhebliches Druckgefälle erforderlich, so dass bei einer solchen Kühlart der Oxidations-Katalysator nicht hochdruckseitig, sondern niederdruckseitig eines Druckwellenladers 1, resp. eines Abgasladers, zu plazieren wäre. Fig. 2 weist auf eine solche Konfiguration hin: Hier ist der Katalysator 5, als oxidations-Katalysator,der Bestandteil eines mit einem Druckwellenlader 1 aufgeladenen Verbrennungsmotorsystem ist, niederdruckseitig des Abgasladers, d.h. im drucklosen Auspuffgas 444, angeordnet. Dabei vermischt sich die über die Leitung 555 nach dem Ladeluftkühler 2 abgezweigte Ladeluft 222 im Katalysator 5 mit den Auspuffgasen 444 zu einem Gasgemisch 444a. Bezüglich der körperlichen Gestaltung eines solchen Katalysators wird auf die Ausführungen unter Fig. 5, 6 resp. 7, 8 verwiesen.

Fig. 3 zeigt eine Schaltung eines Verbrennungsmotors 3 mit einem mechanischen Lader 12 als Aufladegerät. Beim mechanischen Lader ist das Druckgefälle zum drucklosen Abgas immer vorhanden, weshalb der Anteil der zur Kühlung des Katalysators benötigten Ladeluft 222 über eine zuführungsleitung 555 leicht in diesen Katalysator 5 eingeleitet werden kann. Was die körperliche Gestaltung dieses Katalysators betrifft, wird, analog zu Fig. 2, auf die Beschreibungen von Fig. 5, 6 resp. 7, 8 verwiesen.

Fig. 4 zeigt einen typischen Katalysator für eine hochdruckseitige Anordnung, was Fig. 1 entspricht. Dieser Katalysator 4 weist einen separaten Kühlkreislauf mit einem Eintritt 4a für die über die zuführungsleitung 555 herangeführte Ladeluft 222 auf. Dieser Kühlkreislauf verläuft parallel zur Strömungsrichtung der Abgase 333, wobei die beiden Medien, Ladeluft 222/Abgas 333, miteinander nicht in Berührung kommen: Der Ka talysator 4 ist, bezüglich Durchströmung der Ladeluft 222, als Wärmetauscher konzipiert. Er ist auch so ausgebildet, dass die kalorisch verbrauchte Ladeluft 222a nach dem Katalysator über einen eigenen Austritt 4b abgeführt wird. Zwischen den beiden Medien Ladeluft 222 und Abgas 333 findet keine Vermischung statt, weder im Katalysator 4 selbst noch unmittelbar nach diesem.

Fig. 5 zeigt demgegenüber einen typischen Katalysator für eine niederdruckseitige Anordnung, was sich schaltungstechnisch auf die Figuren 2 und 3 bezieht. Grundsätzlich sind hier zwei Ausführungsarten möglich: Die eine Variante entspricht weitgehend der Ausführung nach Fig. 4, d.h., die herangeführte Ladeluft 222 durchströmt vorerst den Katalysator 5 in Wärmeaustauschermanier und vermischt sich dann mit den Auspuffgasen 444 zu einem Ladeluft/Auspuffgas-Gemisch 444a. Die andere Variante sieht eine Durchmischung der beiden Gase bereits bei der Einströmung in den Katalysator vor. Welche Variante schlussendlich zum Einsatz gelangt, hängt im wesentlichen von der Art des Katalysators selbst, d.h., ob es sich um einen OxidationsKatalysator oder Dreiweg-Katalysator handelt. Auf die betreffende Problematik wird auf die Ausführung weiter vorne verwiesen.

Fig. 6 zeigt im Querschnitt die typische Struktur eines Katalysators, in welchem die beiden Gase, Ladeluft und Abgas resp. Auspuffgas, separat durchgschleust werden, die Vermischung derselben also frühestens nach dem Katalysator stattfindet. Im folgenden wird auf eine Herstellungsmöglichkeit eines solchen Katalysators hingewiesen. Der Monolit 6 wird nach wie vor extrudiert. Die für die katalytische Wirkung erforderlichen feingeteilte Zellbereiche 7 werden unverändert gestaltet. In regelmässigen Abstände werden Kühlkanäle 8 mitextrudiert, die nur wenige zwischenwände 9 zur mechanischen Stabilisierung aufweisen. Diese Kühlkanäle 8 sind zunächst wie die eigentlichen Zellen 7 am Eintritt und Austritt offen. Im noch weichen, allenfalls im vorgetrocknet "grünen" Zustand des Katalysators erfolgt nun die eigentlichen Bearbeitung desselben: Die Kühlkanäle 8 werden quer zur Hauptströmungsrichtung (beispielsweise in Fig. 4 Pos. 333 oder Fig. 5 Pos. 444) durchstochen, dies im Bereich der Einströmung der Ladeluft 222 in den Katalysator (Fig. 4 Pos. 4a, Fig. 5 Pos. 5a) und, falls es sich um einen Dreiweg-Katalysator handelt, auch im Bereich der Ausströmung der Ladeluft aus dem Katalysator (Fig. 4 Pos. 4b); diesbezüglich wird auf die nachfolgenden Ausführungen verwiesen.

Verschliesst man nun die stirnseitig offenenen Kanäle in einer Technik, wie sie vom Russfilter her bekannt ist, so ist die erforderliche Struktur des Katalysators sowohl für den Einsatz zu einem mechanischen Lader, als auch für die Plazierung niederdruckseitig des Abgasladers bereitgestellt.

Beim "Canning" wird der Eintritts und Austrittsbereich des Katalysators gedichtet, wie dies vor allem beim Russfilter üblich ist. Sonach ist der separate Zugang für die Kühlluft = Ladeluft quer zur Strömungsrichtung geschaffen. Die dem Katalysator zugeführte Kühlluft muss so geführt werden, dass sie sich auf alle Kühlkanäle 8 gleichmässig verteilt.

Bei der Verwendung des hochdruckseitig des Abgasladers plazierten Katalysators muss auch die Abfuhr der Kühlluft in das druckmässig vom Abgas getrennte Kühlsystem sichergestellt werden. Zu diesem Zweck erfolgt das Anstechen der Kühlkanäle 8 zweifach: einmal, wie vorne ausgeführt im Einströmungsbereich der Abgase in den Katalysator und dann, wie vorne erwähnt, nach Durchströmen der Kühlkanäle 8 in Längsrichtung auf der vorzugsweise gegenüberliegenden Seite in der Nähe der Austrittsfläche des Katalysators. In diesem Fall sind die Kühlkanäle 8 durch eine sich bewährte Russfilter-Stopftechnik sowohl am Eintritt als auch am Austritt zu verschliessen und das "Canning" hat so zu erfolgen, dass für den Einström- und Ausströmbereich zwei gegenüber der Durchströmung des Abgases 333 getrennte Räume geschaffen werden.

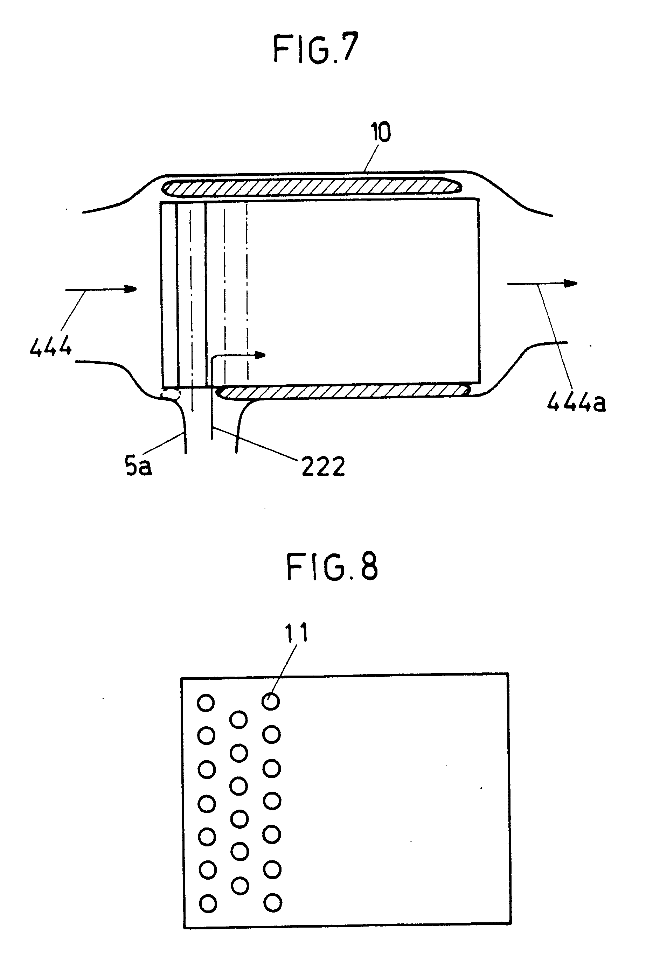

Wünscht man eine Mischung von Ladeluft 222 und Auspuffgas 444 resp. Abgas, die möglichst zu Beginn das Prozesses im Katalysator erfolgen sollte, so verfährt man nach der Lösung gemäss Fig. 7 und 8.

Beim Öffnen der Kühlkanäle dieses Katalysators 10, wie dies unter Fig. 6 erläutert wurde, werden diese jeweils tangential angestochen, wie der abgewinkelte Pfeil der Ladeluft 222 versinnbildlichen will. Vorzugsweise sollen diese Durchbrüche in Form von Bohrungen 11 erfolgen, wie dies aus Fig. 8 hervorgeht. Somit mischt sich die herangeführte Ladeluft 222 bereits am Eintritt 5a in den Katalysator 10 mit dem Auspuffgas 444 resp. Abgas zu einem Ladeluft/Abgas-Gemisch 444a. Wie vorne umfassend erläutert wurde, eignet sich diese Technik zur Kühlung eines Oxidations-Katalysators.

## Ansprüche

1. Schaltung einer Brennkraftmaschine, im wesentlichen bestehend aus einem Motor, einem Aufladeaggregat, einem Ladeluftkühler, einem abströmungsseitig des Motors plazierten Katalysators, dadurch gekennzeichnet, dass der Katalysator (4, 5, 10) durch einen Teil vor dem Motor (3) abgezweigter Ladeluft (222) kühlbar ist.

2. Schaltung nach Anspruch 1, dadurch gekennzeichnet, dass das Aufladeaggregat ein mechanischer Lader (12) oder ein Abgaslader (1) ist.

3. Schaltung nach Anspruch 2, dadurch gekennzeichnet, dass der Abgaslader (1) ein Turbolader oder ein Druckwellenlader ist.

4. Schaltung nach den Ansprüchen 1 und 2, dadurch gekennzeichnet, dass der Katalysator (4) hochdruckseitig des Abgasladers (1) plaziert ist, dass die zur Kühlung des Katalysators (4) benötigte Ladeluft (222) abströmungsseitig des Ladeluftkühlers (2) abzweigt, dass der Katalysator (4) einen Eintritt (4a) und einen Austritt (4b) für die Ladeluft (222) aufweist und dass die kalorisch verbrauchte Ladeluft 222a nach dem Katalysator abströmungsseitig des Abgasladers (1) in die Auspuffgase (444) des Systems strömt.

5. Schaltung nach den Ansprüchen 1 und 2, dadurch gekennzeichnet, dass der Katalysator (5) niederdruckseitig des Abgasladers (1) plaziert ist, dass die zur Kühlung des Katalysators (5) benötigte Ladeluft (222) abströmungsseitig des Ladeluftkühlers (2) abzweigt, dass der Katalysator (5) einen Eintritt (5a) für die Ladeluft (222) aufweist und dass diese Ladeluft im oder nach dem Katalysator (4) mit den Auspuffgasen (444) vermischbar ist.

6. Schaltung nach Anspruch 1, dadurch gekennzeichnet, dass der Katalysator (4, 5, 10) aus einer Zellstruktur (7) besteht, dass in regelmässigen Abständen innerhalb der Zellstruktur (7) in Längsrichtung des Katalysators (4, 5, 10) Kühlkanäle (8) vorhanden sind, welche mindestens ausströmungsseitig verschlossen sind und welche mindestens im Bereich der Einströmung der Ladeluft (222) in den Katalysator (4, 5, 10) quer zur Hauptströmungsrichtung der Abgase (333) oder der Auspuffgase (444) durchstochen sind.

7. Schaltung nach den Ansprüchen 4 bis 6, dadurch gekennzeichnet, dass die Kühlkanäle (8) tangentiale Durchtritte (11) aufweisen.

# FIG.1

# FIG.2

# FIG.3

# FIG.4

# FIG. 5

# FIG.6

# FIG.7

# FIG.8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 702 219 (TADOKORO) <br> * Spalte 2, Zeile 56 - Spalte 3, Zeile 17; Figur 1 * <br> – – – | 1,2 | F 01 N 3/30 <br> F 02 B 37/12 <br> F 02 B 33/44 |
| A | US-A-3 910 042 (YUGE) <br> * Spalte 3, Zeilen 23 - 52; Figuren 1, 2 * <br> – – – | 1 | |
| A | PATENT ABSTRACTS OF JAPAN vol. 10, no. 295 (M-523)(2351) 07 Oktober 1986, <br> & JP-A-61 108822 (NISSAN MOTOR) 27 Mai 1986, <br> * das ganze Dokument * <br> – – – | 1,3,4 | |
| A | FR-A-1 297 457 (THE BRITISH INTERNAL COMBUSTION ENGINE RESEARCH ASSOCIATION) <br> – – – | | |
| A | US-A-4 641 619 (OKIMOTO) <br> – – – – – | | |

| RECHERCHIERTE SACHGEBIETE (Int. Cl.5) |
|---|
| F 01 N <br> F 02 B |

Der vorliegende Recherchenbericht wurde für alle Patentansprüche erstellt

| Recherchenort | Abschlußdatum der Recherche | Prüfer |
|---|---|---|
| Den Haag | 28 November 90 | ERNST J.L. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument